# EUROPÄISCHE PATENTSCHRIFT

(11) **EP 3 717 439 B1**
(45) Veröffentlichungstag und Bekanntmachung des Hinweises auf die Patenterteilung: **01.10.2025**
(21) Anmeldenummer: 18812125.5
(22) Anmeldetag: 28.11.2018
(51) Int. Cl.: C04B 35/482, C04B 35/626, C04B 35/66, B22D 41/00, B22D 41/02, F23M 5/00, F27D 1/00, C01G 25/00, C01G 25/02, C04B 35/48

(54) **SYNTHESEVERFAHREN ZUR HERSTELLUNG EINES CALCIUMZIRKONATHALTIGEN WERKSTOFFES**
SYNTHESIS PROCESS FOR PRODUCING A CALCIUM ZIRCONATE-CONTAINING MATERIAL
PROCÉDÉ DE SYNTHÈSE POUR LA PRÉPARATION D'UN MATÉRIAU CONTENANT DU ZIRCONATE DE CALCIUM

(30) Priorität: 01.12.2017 DE 102017128626
(43) Veröffentlichungstag der Anmeldung: 07.10.2020
(73) Patentinhaber: Refratechnik Holding GmbH, 80807 München (DE)
(72) Erfinder: JANSEN, Helge, 37133 Friedland (DE); ANEZIRIS, Christos Georgios, 09599 Freiberg (DE); JAHN, Constantin, 40667 Meerbusch (DE)
(74) Vertreter: Dr. Solf & Zapf Patent- und Rechtsanwalts PartG mbB
(86) Internationale Anmeldenummer: PCT/EP2018/082904
(87) Internationale Veröffentlichungsnummer: WO 2019/106052

(56) Entgegenhaltungen:
- CN-A- 102 001 705
- DE-A1- 102012 003 478
- DE-B3- 102012 003 483
- JP-A- 2005 200 297
- JP-A- H09 142 929
- SCHAFFÖNER STEFAN ET AL: "Influence of in situ phase formation on properties of calcium zirconate refractories", JOURNAL OF THE EUROPEAN CERAMIC SOCIETY, ELSEVIER SCIENCE PUBLISHERS, BARKING, ESSEX, GB, vol. 37, no. 1, 25 August 2016 (2016-08-25), pages 305 - 313, XP029738857, ISSN: 0955-2219, DOI: 10.1016/J.JEURCERAMSOC.2016.08.017

## Beschreibung

Die vorliegende Erfindung betrifft ein Syntheseverfahren zur Herstellung eines feuerfesten oxidkeramischen Werkstoffes aus CaZrO₃, insbesondere in Form einer feuerfesten, vorzugsweise mechanisch zerkleinerten, insbesondere gebrochenen und/oder gemahlenen, Körnung.

Der Begriff "feuerfest" soll im Rahmen der Erfindung nicht begrenzt sein auf die Definition gemäß ISO 836 bzw. DIN 51060, die einen Kegelfallpunkt von > 1500° C definieren. Feuerfeste Erzeugnisse im Sinne der Erfindung haben einen Druckerweichungspunkt T_{0,5} gemäß DIN EN ISO 1893: 2009-09 von T_{0,5} ≥ 600 °C, bevorzugt T_{0,5} ≥ 800 °C. Demnach sind feuerfeste bzw. refraktäre körnige Werkstoffe bzw. Körnungen im Sinne der Erfindung solche Werkstoffe bzw. Körnungen, die für ein feuerfestes Erzeugnis mit dem oben genannten Druckerweichungspunkt T_{0,5} geeignet sind. Die erfindungsgemäßen feuerfesten Erzeugnisse werden zum Schutz von Aggregatkonstruktionen in Aggregaten eingesetzt, in denen Temperaturen zwischen 600 und 2000 °C, insbesondere zwischen 1000 und 1800° C vorherrschen.

Grobkeramische Erzeugnisse sind bekanntermaßen Erzeugnisse, die aus Körnungen mit Korngrößen bis 6 mm, in besonderen Fällen auch bis 25 mm hergestellt werden (siehe "Gerald Routschka/Hartmut Wuthnow, Praxishandbuch "Feuerfeste Werkstoffe", 5. Auflage, Vulkan-Verlag, (im Folgenden lediglich mit "Praxishandbuch" bezeichnet), Kapitel 2).

Dabei umfasst der Begriff "Körnung" bzw. "körniger Werkstoff" im Sinne der Erfindung einen schüttbaren Feststoff, der aus vielen kleinen, festen Körnern besteht. Weisen die Körner eine Korngröße ≤ 200 µm auf, handelt es sich bei der Körnung um ein Mehl bzw. Pulver. Sind die Körner durch mechanisches Zerkleinern, z.B. Brechen und/oder Mahlen, hergestellt, handelt sich um ein Brechgranulat bzw. eine gebrochene Körnung. Eine Körnung kann aber auch Granulatkörner oder Pelletskörner aufweisen, die durch Granulieren bzw. Pelletieren ohne mechanische Zerkleinerung hergestellt werden. Die Kornverteilung der Körnung wird in der Regel durch Siebung eingestellt.

Bei den grobkeramischen Erzeugnissen wird zudem zwischen geformten und ungeformten Erzeugnissen unterschieden.

Bei geformten grobkeramischen Erzeugnissen handelt es sich um ungebrannte, getemperte oder keramisch gebrannte, vorzugsweise in einer keramischen Fabrik hergestellte, Produkte, insbesondere Steine oder Platten. Sie haben eine definierte Geometrie und sind einbaufertig. Die Formgebung erfolgt z.B. durch Pressen, Stampfen, Rammen oder Schlickergießen. Die geformten Erzeugnisse, insbesondere die Steine, werden z.B. zur Ausbildung einer Zustellung, mit Mörtel oder mörtelfrei ("knirsch") vermauert. Der Produktionsprozess von grobkeramischen geformten Erzeugnissen gliedert sich üblicherweise in die folgenden Schritte (Praxishandbuch, Seite 15/Punkt 2.1):
- Aufbereitung
- Mischen
- Formgebung
- Trocknen
- thermische Behandlung bis 800 °C, Brennen oder Sintern
- Nachbehandlung (falls erforderlich)

Bei den ungeformten Erzeugnissen handelt es sich um Erzeugnisse, die, meist beim Anwender, aus einer ungeformten Masse oder aus Batzen, z.B. durch Gießen, Vibrieren, Stochern, Stampfen oder Spritzen, in ihre endgültige Form gebracht werden. Ungeformte Erzeugnisse werden am Verwendungsort meist hinter Schalungen in größeren Feldern eingebracht und bilden nach der Erhärtung einen Teil der Zustellung. Beispielsweise handelt es sich bei den ungeformten Erzeugnissen um Spritzmassen, Stampfmassen, Gießmassen, Vibrationsmassen oder Vergussmassen.

Sowohl die geformten als auch die ungeformten Erzeugnisse werden in an sich bekannter Weise aus einem grobkeramischen Versatz hergestellt.

Calciumzirkonat ist die stabile stöchiometrische Zusammensetzung im Phasendiagramm CaO-ZrO₂. Es hat eine hohe Schmelztemperatur von 2368 °C und ist alkalikorrosionsbeständig. Da es als Mineral in der Natur nur selten gefunden wird, muss Calciumzirkonat für technische Anwendungen synthetisiert werden. Bei dieser Vorsynthese besteht dabei das Ziel, einen phasenreinen Werkstoff bzw. einen Werkstoff aus 100 % Calciumzirkonat herzustellen. Denn dies gewährleistet gute Eigenschaften der aus dem vorsynthetisierten Werkstoff hergestellten feuerfesten Erzeugnisse.

Die DE 10 2012 003 483 offenbart ein thermoschock- und korrosionsbeständiges keramisches Erzeugnis auf der Basis von Calciumzirkonat, wobei das Gefüge des Erzeugnisses aus vorsynthetisiertem calciumzirkonathaltigem Brechgranulat besteht. Das Brechgranulat weist ein ZrO₂/CaO-Verhältnis zwischen 1,6:1 und 1:1,5 und eine Korngröße von 100 µm bis 6 mm auf. Zudem hat das Brechgranulat einen Anteil von > 50 Ma.-%. Des Weiteren weist das Erzeugnis eine das Brechgranulat umgebende, bei > 1300 °C gesinterte Bindematrix aus feinkörnigem Calciumzirkonat und/oder Zirkoniumdioxid mit Korngrößen zwischen 50 nm und 150 µm auf.

Das calciumzirkonathaltige Brechgranulat kann ein gesintertes und heruntergebrochenes Brechgranulat auf der Basis von synthetisiertem CaZrO₃ aus CaCO₃ und ZrO₂ sein, wobei das gesinterte Brechgranulat bei Temperaturen oberhalb 1300 °C gesintert worden ist.

Des Weiteren kann die Bindematrix hergestellt werden aus einer Mischung aus Calciumcarbonat mit einer Korngröße von 50 nm bis 150 µm und unstabilisiertem Zirkoniumdioxid mit einer Korngröße zwischen 50 nm und 150 µm.

Das Brechgranulat wird zudem vorzugsweise durch Schlickergusstechnologie hergestellt. Es kann aber auch durch bildsame Formgebung oder Presstechnologie hergestellt werden.

Die DE 10 2012 003 478 A1 befasst sich mit der Verwendung eines oxidkeramischen Werkstoffes, der mindestens 75 Gew.-% CaZrO₃ und maximal 25 Gew.-% ZrO₂ aufweist, als Auskleidungsmaterial für Kohlevergasungsanlangen. Die Herstellung des Werkstoffes erfolgt beispielsweise über die Schlickergusstechnologie. Dazu wird gemäß der DE 10 2012 003 478 A1 ZrO₂ mit CaCO₃ und weiteren Additiven vermischt und unter Zugabe von Wasser zu einem Schlicker verarbeitet. Das molare ZrO₂/CaCO₃-Verhältnis beträgt zwischen 1,6:1 und 1:1,5. Der Schlicker wird in eine Gipsform gegossen, welche dem Schlicker das Wasser wieder entzieht, so dass Formkörper erhalten werden. Die Formkörper werden getrocknet und anschließend bei Temperaturen zwischen 800 und 1700 °C bevorzugt bei 1300 bis 1500 °C, unter oxidierenden oder reduzierenden Bedingungen gesintert.

Gemäß einem weiteren Verfahren werden gemäß der DE 10 2012 003 478 A1 die schlickergegossenen Probekörper aus CaZrO₃ in verschiedene Kornklassen gebrochen und die Körnung unter Verwendung weiterer Additive zu einer gieß- bzw. vibrationsfähigen Masse verarbeitet. Diese Masse, die aus grob- und feinkörnigem CaZrO₃ sowie geringen Anteilen ZrO₂ besteht, wird anschließend getrocknet und gesintert. Gemäß der DE 10 2012 003 478 A1 können so großformatige Bauteile mit einer offenen Porosität von bis zu 20 % hergestellt werden.

In der DE 10 2012 003 478 A1 ist auch ein Ausführungsbeispiel enthalten, bei dem der erhaltene Werkstoff nach Sinterung bei 1400 °C 64 % CaZrO₃ und 36 % Ca_{0,15}Zr_{0,85}O_{1,85} aufweist.

Aus dem Artikel "Chemical Synthesis of Pure and Gd-doped CaZrO₃ Powders", I. Erkin Gonenli and A. Cuneyt Tas, geht die Synthese von phasenreinem CaZrO₃-Pulver hervor. Die Herstellung erfolgt aus wässrigen Lösungen aus Calciumchlorid (CaCl₂ · 2H₂O) und Zirkoniumoxidchlorid (ZrOCl₂ ·8 H₂O) in entsprechenden volumetrischen Anteilen. Die Bildung von Calciumzirkonat wurde auf zwei verschiedenen chemischen Synthesewegen erreicht: Selbstpropagierende Verbrennungssynthese und Fällung unter der Anwesenheit von EDTA mittels Säure-Base-Titration.

Die JP 2 005 200 297 offenbart ein Verfahren zur Herstellung eines Calciumzirkonat-Pulvers, möglichst ohne dass eine Zerkleinerung nach dem Sintern erforderlich ist. Dazu werden ein Calciumcarbonat-Pulver und ein Zirkonoxid-Pulver mit Wasser zu einer Schlämme gemischt. Die Schlämme wird sprühgetrocknet und das sprühgetrocknete Produkt bei einer Temperatur von 600 bis 900 °C behandelt. Der Feststoffgehalt der Schlämme liegt dabei bei 5 bis 50 M.-%, z.B. 30 M.-%.

Die CN 10 2001 705 offenbart die Herstellung von Calciumzirkonat aus einer Schlämme mit einem hohen Wassergehalt. Es wird 1,3 bis 2,5 mal so viel Wasser wie Feststoff zugegeben. Und auch nach dem Trocknen liegt der Wassergehalt der Schlämme noch immer bei mindestens 40 M.-%. Gemäß der CN 10 2001 705 ist der hohe Wassergehalt notwendig, um die Nachteile des Trockenmischens zu verhindern. Gemäß der CN 10 2001 705 resultiert aus dem Trockenmischen eine ungleiche Verteilung und somit eine inkomplette Reaktion und eine ungleiche Partikelgröße sowie ein hoher Energieverbrauch.

Die JP H09 142929 offenbart die Herstellung von Calciumzirkonat aus einem gepressten Formkörper, der aus Calciumhydroxid-Pulver und Zirkonoxid-Pulver besteht. Gemäß der JP H09 142929 kommt es auf die Verwendung von Calciumhydroxid als CaO-Quelle anstelle von Branntkalk an. Dabei können die beiden Pulver zwar vor dem Brennen in Formkörper gepresst werden, allerdings werden diese Formkörper vor dem Brennen vorzugsweise wieder zerkleinert. In der JP H09 142929 wird nicht offenbart, dass vor dem Pressen Wasser zu der Mischung zugegeben wird.

Aufgabe der vorliegenden Erfindung ist die Bereitstellung eines einfachen und kostengünstigen, ökonomischen und ökologisch unbedenklichen Verfahrens zur Synthese eines, bevorzugt phasenreinen, Calciumzirkonat-Werkstoffes, vorzugsweise in Form einer calciumzirkonathaltigen Körnung.

Diese Aufgabe wird durch Syntheseverfahren mit den Merkmalen von Anspruch 1 gelöst.

Im Folgenden wird die Erfindung anhand einer Zeichnung beispielhaft näher erläutert. Es zeigen:
- Figur 1:: Ein Röntgenphasendiagramm einer erfindungsgemäß gemäß dem Ausführungsbeispiel 1 hergestellten Körnung aus phasenreinem Calciumzirkonatwerkstoff

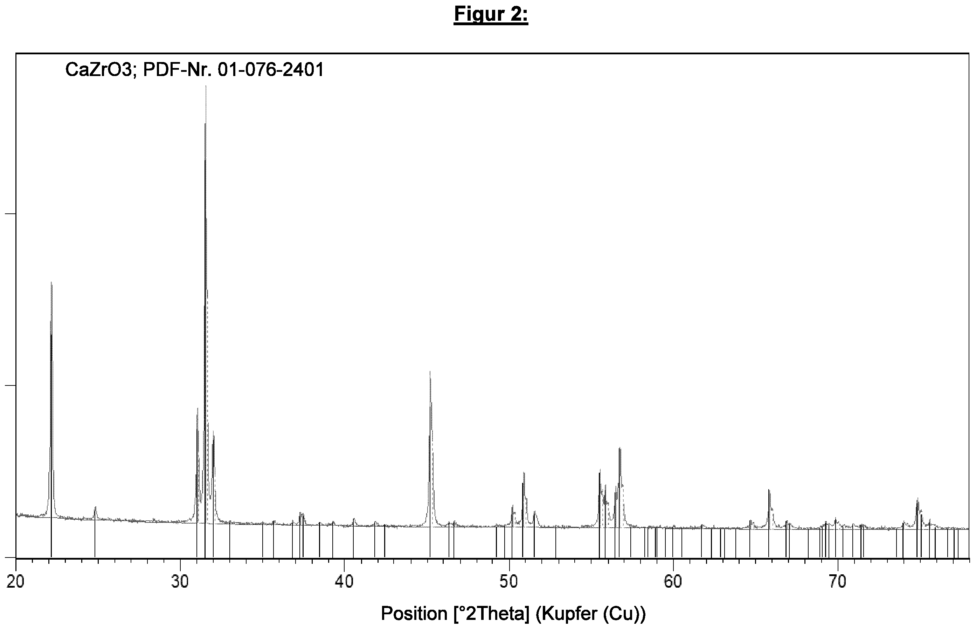

- Figur 2:: Ein Röntgenphasendiagramm eines gemäß dem Ausführungsbeispiel 2 hergestellten Formkörpers

Im Rahmen der Erfindung wurde überraschenderweise herausgefunden, dass es möglich ist, einen, bevorzugt phasenreinen, calciumzirkonathaltigen Werkstoff mittels Pressformgebung und Sintern aus einer Mischung herzustellen, die ausschließlich aus zumindest einer Ca-haltigen mehlförmigen Rohstoffkomponente, zumindest einer ZrO₂-haltigen mehlförmigen Rohstoffkomponente und Wasser besteht und einen Wassergehalt von > 5 bis 10 Gew.-%, vorzugsweise 7 bis 8 Gew.-% Wasser bezogen auf die Trockenmasse der Mischung aufweist.

Das erfindungsgemäße Syntheseverfahren weist somit folgende Verfahrensschritte auf:
a) Herstellen der Mischung aus der zumindest einen Ca-haltigen mehlförmigen Rohstoffkomponente, der zumindest einen ZrO₂ haltigen mehlförmigen Rohstoffkomponente und dem Wasser mit einem Wassergehalt von > 5 bis 10 Gew.-%, vorzugsweise 7 bis 8 Gew.-% Wasser bezogen auf die Trockenmasse der Mischung,
b) Pressen der Mischung zu einem grünen Formkörper,
c) Vorzugsweise Trocknen des grünen Formkörpers,
d) Sintern des Formkörpers,
e) Gegebenenfalls mechanisches Zerkleinern, vorzugsweise Brechen und/oder Mahlen, des gesinterten Werkstoffes zu einer Körnung.

Erfindungsgemäß enthält die Mischung somit einen höheren Wasseranteil als dies bei der herkömmlichen Pressformgebung üblich ist. Zudem enthält die Mischung erfindungsgemäß keine weiteren Bestandteile, insbesondere keine Bindemittel und/oder Presshilfsmittel.

Im Rahmen der Erfindung wurde dabei überraschenderweise herausgefunden, dass die Bindemittel und/oder Presshilfsmittel, auch wenn sie in nur sehr geringen Mengen vorhanden sind, trotzdem die Synthese des Calciumzirkonats stören. Es hat sich beispielsweise herausgestellt, dass organische, temporäre Bindemittel und/oder Presshilfsmittel das zuvor eingestellte Molverhältnis CaO/ZrO₂ während des Brands verändern. Es wird vermutet, dass die organischen Bindemittel und/oder Presshilfsmittel beim Brennen CO und/oder CO₂ frei setzen, welches das in den Rohstoffen enthaltende Ca reduziert. Das reduzierte Ca wiederum geht in eine Gasphase über und verdampft, so dass sich das Molverhältnis CaO/ZrO₂ ändert. Diese Reaktionen finden ab einer Temperatur von ca. 550 °C statt. Somit wird die Synthese durch die organischen Bindemittel und/oder Presshilfsmittel, auch wenn sie nur in sehr geringen Mengen vorhanden sind, insbesondere so gestört, dass die Herstellung eines phasenreinen Werkstoffes nicht möglich ist.

Der erfindungsgemäße hohe Wassergehalt sorgt zum einen für einen ausreichenden Zusammenhalt des grünen Formkörpers auch ohne Bindemittel. Des Weiteren hat sich aber überraschenderweise herausgestellt, dass der hohe Wassergehalt in der Mischung auch dazu beiträgt, dass ein phasenreiner Werkstoff hergestellt werden kann. Denn aufgrund des hohen Wassergehalts herrscht beim Sintervorgang eine Wasserdampfatmosphäre, die den Sintervorgang unterstützt. Durch die Wasserdampfatmosphäre wird die Oberflächenspannung der einzelnen Mehlkörner der Rohstoffe herab gesetzt, was die Sinterfähigkeit verbessert. Zudem wirkt die Wasserdampfatmosphäre überraschenderweise der Verdampfung von CaO entgegen.

Um einen phasenreinen Werkstoff herstellen zu können, sollte das Molverhältnis CaO/ZrO₂ in der Mischung zudem im Wesentlichen äquimolar sein. Das heißt, das Molverhältnis CaO/ZrO₂ in der Mischung beträgt vorzugsweise 1:1. Zumindest liegt das Molverhältnis aber erfindungsgemäß bei 1,5:1 bis 1:1,6. Bei der Bestimmung des Molverhältnisses wird jeweils idealisiert von einem reinen Rohstoff ausgegangen. Ausgehend von dem gewünschten Verhältnis wird über die molaren Massen das Gewichtsverhältnis berechnet. Dabei wird natürlich berücksichtigt, dass die CaO-Träger auch andere Bestandteile, beispielsweise CO₂ beim CaCO₃ enthalten.

Bei der verwendeten Ca-Rohstoffkomponente handelt es sich vorzugsweise um eine CaCO₃- und/oder CaO- und/oder Ca(OH)₂- und/oder CaC₂-haltige Rohstoffkomponente. Vorzugsweise wird eine CaCO₃-Rohstoffkomponente verwendet.

Bei der CaCO₃-Rohstoffkomponente handelt es sich vorzugsweise um natürliches, gemahlenes Kalksteinmehl (GCC *= ground calcium carbonate*) oder synthetisches, gefälltes Calciumcarbonat (PCC = *precipitated calcium carbonate*) oder um Kreide. Besonders bevorzugt wird, insbesondere aufgrund seiner hohen Reinheit, PCC verwendet. Die Herstellung von PCC erfolgt vorzugsweise durch Reaktion von Kohlendioxid mit Kalkmilch bzw. einer Kalkhydrat-Suspension. Die Kalkhydrat-Suspension wird entweder durch Löschen von Branntkalk oder durch Dispergieren von Calciumhydroxid in Wasser hergestellt.

Bei der CaO-Rohstoffkomponente handelt es sich vorzugsweise um Branntkalk.

Als Ca(OH)₂-RohstofiFkomponente wird vorzugsweise Kalkhydrat verwendet.

Als ZrO₂-Rohstoffkomponente wird vorzugsweise synthetisch hergestelltes Zirkoniumdioxid verwendet. Vorzugsweise ist das Zirkoniumdioxid nicht stabilisiert (monoklin). Es kann aber auch stabilisiert sein.

Die Rohstoffkomponenten weisen zudem jeweils vorzugsweise eine Reinheit von mindestens 96 Gew.-%, bevorzugt mindestens 99 Gew.% auf. Das heißt der Mindestgehalt der jeweiligen Verbindung (CaCO₃, CaO, Ca(OH)₂, CaC₂ bzw. ZrO₂) beträgt vorzugsweise mindestens 96 Gew.-%, bevorzugt mindestens 99 Gew.%, bestimmt jeweils mittels Röntgenfluoreszenzanalyse (RFA) nach DIN 51001:2003.

Des Weiteren weist die Ca-Rohstoffkomponente eine Korngröße von ≤ 200 µm, bevorzugt von ≤ 50 µm, besonders bevorzugt zwischen 200 nm und 10 µm gemäß DIN EN 725-5:2007 auf. Und der mittlere Korndurchmesser der Ca-Rohstoffkomponente beträgt vorzugsweise 500 nm bis 5 µm, bevorzugt 0,8 bis 1 µm.

Die ZrO₂-Rohstoffkomponente weist vorzugsweise eine Korngröße von ≤ 200 µm, bevorzugt von ≤ 150 µm, besonders bevorzugt zwischen 200 nm und 10 µm gemäß DIN EN 725-5:2007 auf. Und der mittlere Korndurchmesser (d₅₀) der ZrO₂-Rohstoffkomponente beträgt vorzugsweise 500 nm bis 5 µm, bevorzugt 0,7 bis 1 µm.

Die Korngrößen und der mittlere Korndurchmesser werden bestimmt mittels Lasergranulometrie gemäß DIN EN 725-5:2007. Das jeweilige Mehl wird dazu mittels Ultraschall vorzugsweise in Ethanol dispergiert.

Wie bereits erläutert, erfolgt die Formgebung der ausschließlich aus den Rohstoffkomponenten und Wasser bestehenden Mischung zu grünen Formkörpern erfindungsgemäß durch Pressen. Das Pressen erfolgt dabei vorzugsweise mit einem Pressdruck von 30 bis 150 N/mm², bevorzugt von 50 bis 80 N/mm². Des Weiteren erfolgt das Pressen vorzugsweise durch uniaxiales Pressen. Es kann aber auch durch isostatisches Pressen oder Vibrationspressen oder Brikettieren oder Pelletieren erfolgen.

Das Mischen findet vorzugsweise im Intensivmischer im Gegenstromverfahren (Wirbler und Teller drehen in gegensätzliche Richtung) statt.

Vorzugsweise werden zudem quaderförmige grüne Formkörper, insbesondere in herkömmlichen Steinformaten, hergestellt. Bevorzugt weisen die grünen gepressten Formkörper folgende Abmessungen auf:

| | | vorzugsweise |
|---|---|---|
| **Höhe** | 20 bis 100 mm | 25 bis 75 mm |
| **Länge** | 20 bis 300 mm | 150 bis 250 mm |
| **Breite** | 20 bis 150 mm | 25 bis 100 mm |

Die grünen Formkörper weisen zudem vorzugsweise eine Rohdichte bestimmt gemäß DIN EN 993-17:1999 von 2,0 bis 3,0 g/cm³, bevorzugt 2,1 bis 2,5 g/cm³, und/oder eine Porosität gemäß DIN 66133:1993-06 von 30 bis 60 Vol.-%, bevorzugt 40 bis 50 Vol.-%, auf.

Damit die grünen Formkörper handlebar sind, weisen sie vorzugsweise eine Kaltbiegefestigkeit nach DIN EN 993-6:1995-04 von mindestens 1 MPa auf.

Nach dem Pressen werden die grünen Formkörper, wie bereits erläutert, getrocknet. Die Trocknung erfolgt vorzugsweise bis auf eine Restfeuchte zwischen 0 und 2 Gew.-%, insbesondere zwischen 0 und 0,5 Gew.-%, bestimmt gemäß DIN 51078:2002-12. Getrocknet werden die grünen Formkörper vorzugsweise zwischen 25 und 110 °C, insbesondere zwischen 100 und 105 °C für eine Zeit von 4 bis 24 h, bevorzugt 12 bis 24 h.

Nach dem Trocknen erfolgt erfindungsgemäß die Sinterung. Die Sinterung erfolgt vorzugsweise mit einer Haltephase bei einer Endtemperatur von 1200 bis 1800 °C, bevorzugt 1400 bis 1650 °C, für eine Dauer von 2 bis 10 h, bevorzugt von 4 bis 6 h. Vorzugsweise wird dabei mit einer Aufheizrate von 1 bis 10K/min, bevorzugt von 2 bis 5 K/min aufgeheizt. Zudem wird während des Aufheizens vorzugsweise eine Zwischenhaltephase bei einer Temperatur von 400 bis 1000 °C, bevorzugt 550 bis 900 °C, für eine Dauer von 1 bis 3 h, bevorzugt von 1,5 bis 2,5 h, durchgeführt. Das Abkühlen erfolgt vorzugsweise frei im Ofen.

Des Weiteren erfolgt die Sinterung vorzugsweise unter neutralen oder oxidierenden Bedingungen.

Die Sinterung erfolgt zudem vorzugsweise in einem elektrisch beheizten oder einem gasbeheizten Ofen. Gasbeheizte Öfen haben einen regelbaren Sauerstoffanteil in der Brennluft (Sauerstoffüber- oder -unterschuss), können höhere Heizraten erreichen und haben zumeist ein (anderes) Strömungsfeld der Gase im Brennraum im Vergleich zu elektrisch beheizten Öfen.

Zudem erfolgt die Sinterung in einem diskontinuierlichen oder kontinuierlichen Prozess, großtechnisch bevorzugt in einem kontinuierlichen Prozess.

Wie bereits erläutert, ist es mit dem erfindungsgemäßen Verfahren insbesondere möglich einen sehr reinen, insbesondere einen phasenreinen, Calciumzirkonatwerkstoff herzustellen. Der erfindungsgemäß hergestellte, phasenreine Calciumzirkonatwerkstoff weist somit insbesondere keine freien Rohstoffe und keine Mischphasen auf. Es hat also eine vollständige Umsetzung der eingesetzten Rohstoffkomponenten zu Calciumzirkonat stattgefunden. Zumindest weist der erfindungsgemäß hergestellte Calciumzirkonatwerkstoff einen Gehalt von mindestens 98 Gew.-%, bevorzugt mindestens 99 Gew.-% CaZrO₃ bezogen auf die Trockenmasse des Calciumzirkonatwerkstoffs auf.

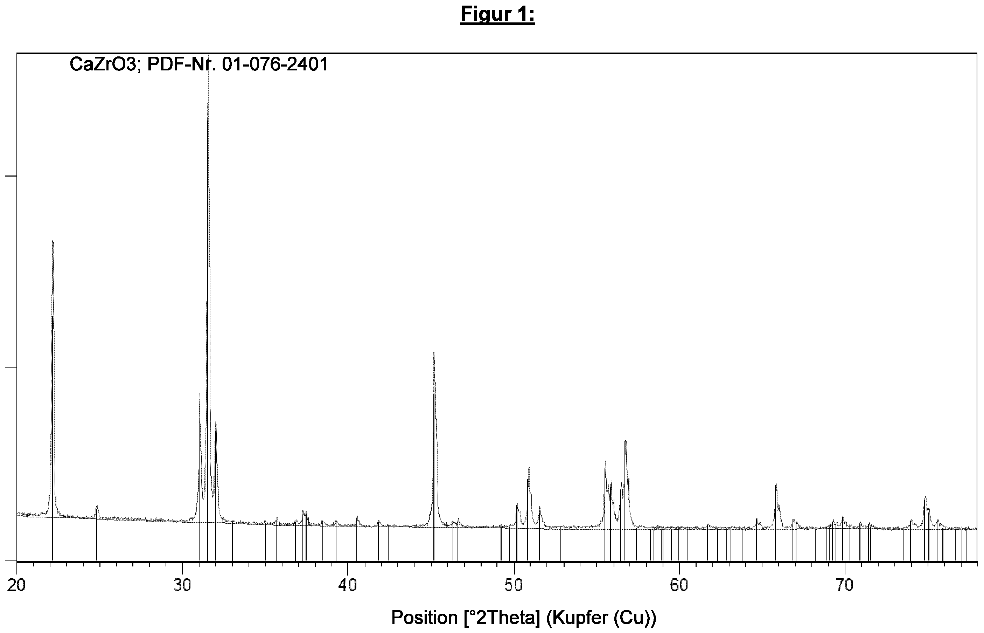

Ein beispielhaftes Röntgenphasendiagramm eines erfindungsgemäß gemäß dem Ausführungsbeispiel hergestellten phasenreinen Calciumzirkonatwerkstoffs ist in Figur 1 dargestellt.

Phasenrein im Rahmen der Erfindung bedeutet dabei, dass bei einer Analyse des Phasenbestands mittels Röntgenbeugung keine weiteren Phasen außer Calciumzirkonat detektiert werden bzw. detektierbar sind. Dies ist in Figur 1 gut zu erkennen. Denn es sind ausschließlich Peaks vorhanden, die Calciumzirkonat zugeordnet werden können.

Die Phasenanalyse findet dabei gemäß DIN 13925-2:2003 statt. Dazu wird die getrocknete, aufgemahlene Substanz (< 45 µm) im Probenträger präpariert. Bei dem Prüfgerät handelt es sich vorzugsweise um folgendes Gerät: PHILIPS PW1820. Die Auswertung erfolgt vorzugsweise mittels der Analysesoftware X'Pert Pro MPD (PANalytical B.V., Almelo, Netherlands). Der Untergrund wird nach Sonneveld & Visser bestimmt., Die Reflexe werden mittels des Programms automatisch anhand der Auswahl der geeigneten PDF-Karten identifiziert, (bis hierhin handelt es sich um eine halbquantitative Untersuchung). Anschließend erfolgt ebenfalls mittels des Programms automatisiert die Umwandlung in Phasen, die Verfeinerung der Streuung im halbautomatischen Modus und danach eine Rietveld-Analyse.

Des Weiteren weisen die gesinterten Formkörper aus dem erfindungsgemäßen Calciumzirkonatwerkstoff vorzugsweise eine offene Porosität von 5 bis 50 Vol.-%, bevorzugt 8 bis 40 Vol.-%, bestimmt gemäß DIN EN 993-1:1995-04 auf.

Zudem weisen die gesinterten Formkörper, insbesondere die gesinterten Steine, vorzugsweise eine Rohdichte von 2,50 bis 4,50 g/cm³, insbesondere von 2,60 bis 4,30 g/cm³, bestimmt gemäß DIN 993-1:1995-04 auf.

Vorzugsweise werden die gesinterten Formkörper, wie bereits erläutert, zur Weiterverarbeitung nach dem Sintern mechanisch zerkleinert, bevorzugt gebrochen und/oder gemahlen, und anschließend durch Siebung in Kornklassen klassiert. Die Siebung erfolgt im Siebturm durch Trockensiebung nach DIN EN 933-1:2012. Vorzugsweise wird die Siebmaschine Retsch AS 200 control, bei 0,5 mm Amplitude für 2 min, verwendet.

Die Bezeichnung Kornfraktion bzw. Kornklasse meint, dass keine Körner auf dem oberen Sieb liegen bleiben und keine durch das untere durchfallen. Es liegt also kein Überkorn und kein Unterkorn vor. Kornklassen weisen also jeweils Korngrößen zwischen den beiden angegebenen Prüfkorngrößen auf.

Die vorsynthetisierte erfindungsgemäße Körnung weist eine sehr gute thermomechanische Beständigkeit auf.

Zudem weist die erfindungsgemäß hergestellte Körnung vorzugsweise eine Kornporosität (offene Porosität) gemäß DIN 66133:1993 von 5 bis 50 Vol.-%, bevorzugt 10 bis 40 Vol.-%, und/oder vorzugsweise einen mittleren Porendurchmesser (d₅₀) gemäß DIN 66133:1993 von 0,5 bis 2 µm, bevorzugt 0,8 bis 1,2 µm, auf.

Des Weiteren weist die erfindungsgemäß hergestellte Körnung vorzugsweise eine Reindichte, ermittelt durch Heliumpyknometrie nach DIN 66137-2:2004 von 4,40 bis 4,70 g/cm³, bevorzugt von 4,65 bis 4,70 g/cm³ auf.

Die erfindungsgemäße Körnung kann dann in an sich bekannter Weise in grobkeramischen Versätzen zur Herstellung der geformten oder ungeformten, grobkeramischen feuerfesten Erzeugnisse verwendet werden.

Handelt es sich bei den gesinterten Formkörpern um Pellets bzw. Granulatkörner oder dergleichen können diese auch ohne mechanische Zerkleinerung direkt als feuerfeste Körnung weiter verwendet werden.

Üblicherweise weist ein grobkeramischer Versatz ein Trockenstoffgemisch aus zumindest einer feuerfesten Körnung und additiv vorzugsweise Bindemittel und/oder Wasser und/oder flüssige Additive bzw. Zusatzmittel auf. Das heißt, die Menge an Bindemittel (trocken oder flüssig) und/oder Wasser und/oder flüssigem Zusatzmittel wird additiv zugegeben und bezieht sich auf die gesamte Trockenmasse des Trockenstoffgemisches (nicht auf die Gesamtmasse des Versatzes).

Im Fall von ungeformten Erzeugnissen sind das flüssige und/oder feste bzw. trockene, pulverförmige Bindemittel und/oder das flüssige Zusatzmittel vorzugsweise beigepackt in einem von den anderen trockenen Bestandteilen des Versatzes getrennten Behältnis.

Bei dem Bindemittel handelt es sich um ein für feuerfeste Erzeugnisse geeignetes Bindemittel, vorzugsweise ein temporäres Bindemittel. Diese Bindemittel sind beispielsweise im Praxishandbuch, Seite 28/Punkt 3.2 angegeben.

Bei dem Zusatzmittel handelt es sich vorzugsweise um ein Presshilfsmittel.

Das Trockenstoffgemisch weist zumindest eine grobe, vorsynthetisierte, calciumzirkonathaltige Körnung mit einer Korngröße > 200 µm, vorzugsweise in einer Menge von 10 bis 90 Gew.-%, bevorzugt von 80 bis 90 Gew.-% bezogen auf die gesamte Trockenmasse des Trockenstoffgemisches und/oder zumindest eine vorsynthetisierte, calciumzirkonathaltige Mehlkörnung mit einer Korngröße ≤ 200 µm, vorzugsweise in einer Menge von 0 bis 30 Gew.-%, bevorzugt von 10 bis 20 Gew.-% bezogen auf die gesamte Trockenmasse des Trockenstoffgemisches auf.

Die Korngrößen der Körnungen werden bestimmt mittels Trockensiebung nach DIN EN 933-1:2012.

Des Weiteren kann das Trockenstoffgemisch auch anstelle der Mehlkörnung aus dem Calciumzirkonatwerkstoff oder zusätzlich dazu zumindest eine mehlförmige Ca-Rohstoffkomponente und zumindest eine mehlförmige ZrO₂-Rohstoffkomponente enthalten, aus denen in situ beim Brennen des Erzeugnisses weiteres Calciumzirkonat gebildet wird. Bei der Ca-Rohstoffkomponente und der ZrO₂-Rohstoffkomponente handelt es sich somit die oben angegebenen Rohstoffkomponenten. Die Rohstoffkomponenten sind zur Ausbildung eines phasenreinen Calciumzirkonats vorzugsweise in äquimolarem Verhältnis in dem Trockenstoffgemisch enthalten.

Bevorzugt weist das Trockenstoffgemisch ausschließlich erfindungsgemäße vorsynthetisierte, calciumzirkonathaltige Körnungen und gegebenenfalls der zumindest einen Ca-Rohstoffkomponente und der zumindest einen ZrO₂-Rohstoffkomponente auf, besonders bevorzugt besteht es daraus.

Das Trockenstoffgemisch kann aber auch zumindest eine weitere grobe Körnung mit einer Korngröße > 200 µm und/oder zumindest eine weitere Mehlkörnung mit einer Korngröße ≤ 200 µm aus anderen üblichen feuerfesten Werkstoffen aufweisen.

Des Weiteren kann das Trockenstoffgemisch zumindest einen trockenen Zusatzstoff für feuerfeste Werkstoffe, vorzugsweise in einer Gesamtmenge < 5 Gew.-% und/oder zumindest ein trockenes Zusatzmittel für feuerfeste Werkstoffe, vorzugsweise in einer Gesamtmenge von < 5 Gew.-% aufweisen. Bei dem trockenen Zusatzstoff handelt es sich um einen für feuerfeste Erzeugnisse geeigneten Zusatzstoff. Diese Zusatzstoffe sind beispielsweise im Praxishandbuch, Seite 28/Punkt 3.3 angegeben. Sie werden verwendet, um die Verarbeitbarkeit bzw. Verformbarkeit zu verbessern oder das Gefüge der Erzeugnisse zu modifizieren und damit besondere Eigenschaften zu erzielen.

Der Grobkornanteil (=alle in dem Versatz enthaltenen groben Körnungen) des Trockenstoffgemischs weist zudem vorzugsweise eine Korngröße bis maximal 8 mm, bevorzugt bis maximal 6 mm, besonders bevorzugt bis maximal 4 mm, auf.

Die Kornverteilung des Grobkornanteils des Trockenstoffgemisches ist vorzugsweise stetig.

Die Kornverteilung des Mehlkornanteils (=alle in dem Versatz enthaltenen Mehlkörnungen) des Trockenstoffgemisches ist vorzugsweise ebenfalls stetig.

Und auch die Kornverteilung des gesamten Trockenstoffgemisches ist vorzugsweise stetig.

Der Grobkornanteil dient dabei in an sich bekannter Weise als Stützkorn. Aus dem Mehlkornanteil wird beim Brennen die Bindematrix ausgebildet, in die der Grobkornanteil eingebettet ist.

Wie bereits erläutert, dient der Versatz zur Herstellung der ungeformten oder geformten, grobkeramischen Erzeugnisse.

Für die Herstellung von gepressten Erzeugnissen, insbesondere Steinen, wird eine Mischung bzw. bildsame Masse aus dem Trockenstoffgemisch des Versatzes mit zumindest einem flüssigen und/oder festen Bindemittel und/oder Wasser und/oder einem Presshilfsmittel hergestellt. Wenn der Versatz ein flüssiges Bindemittel und/oder Presshilfsmittel enthält, ist die Zugabe von Wasser nicht notwendig, aber möglich. Es kann aber auch ausschließlich Wasser zugegeben werden.

Zur optimalen Verteilung des oder der Bindemittel und/oder des Wassers und/oder des Presshilfsmittels wird z.B. 3 bis 10 Minuten lang gemischt.

Die Mischung wird in Formen gegeben und gepresst, so dass Formkörper gebildet werden. Die Pressdrücke liegen in üblichen Bereichen, z.B. bei 50 bis 150 MPa, bevorzugt bei 100 bis 150 MPa.

Vorzugsweise wird nach dem Pressen eine Trocknung durchgeführt, z.B. zwischen 40 und 110 °C, insbesondere zwischen 100 und 105 °C. Die Trocknung erfolgt vorzugsweise bis auf eine Restfeuchte zwischen 0 und 2 Gew.-%, insbesondere zwischen 0 und 1 Gew.-%, bestimmt gemäß DIN 51078:2002-12.

Die getrockneten, gepressten Steine können ungebrannt verwendet werden oder gebrannt werden.

Zum Brennen werden die, vorzugsweise getrockneten, gepressten Steine in einem keramischen Brennofen, z.B. einem Tunnelofen, keramisch gebrannt, vorzugsweise zwischen 1200 und 1800 °C, insbesondere zwischen 1400 und 1700 °C. Vorzugsweise wird oxidierend gebrannt, abhängig von der Materialzusammensetzung kann aber auch ein reduzierender Brand vorteilhaft sein.

Die Formgebung der geformten Erzeugnisse kann aber auch auf andere übliche Weise, vorzugsweise durch Schlickergießen oder Strang- bzw. Extrusionsverfahren einer plastischen Mischung oder manuelles oder mechanisches Stampfen bzw. Rammen erfolgen. Beim Schlickergießen ist die Mischung entsprechend fließfähig.

Vorzugsweise weisen die gebrannten, geformten Erzeugnisse, insbesondere die Steine, eine Rohdichte von 4,00 bis 4,70 g/cm³, insbesondere von 4,40 bis 4,60 g/cm³, bestimmt gemäß DIN 993-1:1995-04 auf.

Die Kaltbiegefestigkeit nach DIN EN 993-6:1995-04 der gebrannten, geformten Erzeugnisse, insbesondere der Steine, liegt vorzugsweise bei 10 bis 40 MPa.

Zudem weisen die gebrannten, geformten Erzeugnisse, insbesondere die Steine, vorzugsweise einen E-Modul gemäß DIN EN ISO 12680-1:2007-05 von 80 bis 200 GPa, bevorzugt 90 bis 120 GPa, auf.

Für die Herstellung von ungeformten Erzeugnissen, insbesondere Massen, bevorzugt Spritzmassen oder Vibrationsmassen oder Gießmassen oder Stochermassen, wird ebenfalls eine Mischung aus dem Trockenstoffgemisch mit zumindest einem trockenen und/oder flüssigen Bindemittel und/oder Wasser und/oder zumindest einem flüssigen Zusatzmittel hergestellt und die Mischung z.B. hinter eine Schalung eingebracht. Wenn der Versatz ein flüssiges Bindemittel und/oder Zusatzmittel enthält, ist die Zugabe von Wasser nicht notwendig, aber möglich. Es kann aber auch ausschließlich Wasser zugegeben werden.

Wie bereits erläutert, ist es mit dem erfindungsgemäßen Syntheseverfahren auf einfache, ökonomische und ökologisch unbedenkliche Weise einen, bevorzugt phasenreinen, calciumzirkonathaltigen Werkstoff herzustellen. Der Aufwand des Herstellungsverfahrens (Mischen, Pressen, Brennen, vorzugsweise Brechen) ist sehr gering. Zudem sind die Korneigenschaften über die Sintertemperatur einfach steuerbar. Eine höhere Sintertemperatur führt dabei zur einer geringeren Porosität. Körnungen mit geringerer Porosität sind besonders gut für Gießmassen verwendbar. Vorzugsweise werden Körnungen für Gießmassen bei > 1550 °C gesintert. Je höher die Rohdichte der vorsynthetisierten Körnung ist, desto geringer ist auch die Schwindung beim Brennen des daraus hergestellten Werkstoffes.

Die ungeformten und geformten Erzeugnisse werden beispielsweise für die feuerfeste Zustellung, vorzugsweise für das Arbeitsfutter oder das Sicherheitsfutter, einer Kohlevergasungsanlage verwendet.

Auch können sie als Hitzeschutzkachel in Gasturbinen, als Inlay in einer Schieberplatte, Tiegel für Titanguss/Titanlegierungen (VIM), Tiegel für andere NE-Metalle (z.B. Nickelbasis-Legierungen) verwendet werden.

Anhand der nachfolgenden Beispiele wird die Überlegenheit des erfindungsgemäßen Verfahrens und der grobkeramischen Erzeugnisse nochmals verdeutlicht:
**Ausführungsbeispiel 1 (Herstellung von CaZrO₃-Körnung aus CaCO₃ und unstabilisiertem ZrO₂):**
Tabelle 1 stellt beispielhaft eine Zusammensetzung für die Herstellung einer Pressmasse dar. Dabei wurde Calciumcarbonat (PreCarb 400) der Firma Schäfer Kalk GmbH & Co. KG, Diez und monoklines Zirkoniumdioxid (ZirPro CS02) der Firma Saint-Gobain, Le Pontet Cedex, Frankreich, verwendet.

**Tabelle 1: Zusammensetzung für die Herstellung einer Pressmasse**

| **Material** | **Anteil in Gew.-% bezogen auf trockene Masse** |
|---|---|
| ZrO₂ | 55,2 |
| CaCO₃ | 44,8 |
| Wasser | 8,0 |

Zuerst wurden die trockenen Rohstoffe eingewogen und in einen Intensivmischer gegeben. Nach einem Mischvorgang von 10 min wurde das Wasser hinzugefügt. Der Mischer wurde im Gegenstromprinzip betrieben (Wirbler und Teller drehen sich in unterschiedliche Richtung). Die feuchte Masse wurde weitere 10 min gemischt. Die entstandene Masse wurde dann in die Pressmulde der hydraulischen Presse eingefüllt. Mit einem Pressdruck von bis zu 50 MPa sind daraus Formkörper gepresst worden. Nach dem Entformen erfolgte die Trocknung bei 100 °C für 24 h. Danach wurden die Proben bei 1400 °C für 5 h gesintert, mit einer Haltezeit während der Auffahrphase von 2 h bei 900 °C. Die Aufheizrate betrug 3 K min⁻¹. Das Abkühlen im Ofen erfolgte frei. Anschließend wurde das so gewonnen Material grob vorzerkleinert und anschließen in einem Backenbrecher in verschiedene Kornklassen gebrochen und auch daraufhin klassiert. Eine Untersuchung im XRD zeigte ausschließlich Peaks, die CaZrO₃ zurechenbar sind (siehe Figur 1). Das Material enthielt somit zu 100 % CaZrO₃.

**Ausführungsbeispiel 2 (Herstellung eines thermoschock- und korrosionsbeständigen Formkörpers auf Basis des phasenreinen Calciumzirkonates aus Ausführungsbeispiel 1 unterschiedlicher Kornfeinheit):**
Tabelle 2 zeigt nachfolgend eine Zusammensetzung für die Herstellung eines grobkörnigen feuerfesten Formkörpers aus dafür synthetisiertem CaZrO₃.

**Tabelle 2: Zusammensetzung für die Herstellung eines grobkörnigen feuerfesten Formkörpers aus dafür synthetisiertem CaZrO₃**

| **Material** | **Spezifikation** | **Anteil in Gew.-%** |
|---|---|---|
| CaZrO₃ | **<0,16 mm** | **33,4** |
| | **0,16 - 0,63 mm** | **34,1** |
| | **0,63 - 1,0 mm** | **9,8** |
| | **1,0 - 2,0 mm** | **15,4** |
| | **2,0 - 3,15 mm** | **7,3** |
| Bindemittel: Polyvinylalkohol | Optapix PAF 60, ZSCHIMMER & SCHWARZ GmbH & Co KG - CHEMISCHE FABRIKEN, Lahnstein | **3,5** |

Für die Herstellung der Pressmasse wurden zuerst die trockenen Rohstoffe eingewogen, dabei wurde von fein nach grob in den Mischbehälter eingefüllt. Für das Mischen wurde ein ToniMix Baustoffmischer von Toni Technik Baustoffprüfsysteme GmbH verwendet. Die trockenen Rohstoffe wurden für 5 min gemischt. Anschließend wurde der Binder zugegeben und alles für weitere 5 min vermischt. Danach erfolgte die Pressformgebung in einer hydraulischen uniaxialen Presse. Bei 150 MPa wurden Probekörper hergestellt. Nach einer kurzen Trocknung bei 100 °C für 4 h erfolgte die Sinterung bei 1650 °C für 6 h mit einer Haltezeit in der Auffahrphase bei 900 °C für 2 h. Die Aufheizrate betrug 2 K min⁻¹. Tabelle 3 zeigt ausgewählte Eigenschaften des so hergestellten Materials.

**Tabelle 3: Eigenschaften des hergestellten Materials**

| | **Einheit** | **Wert** |
|---|---|---|
| Rohdichte, nach DIN 993-1:1995 | g/cm⁻³ | 4,30 |
| Reindichte | g/cm⁻³ | 4,66 |
| offene Porosität, nach DIN 993-1:1995 | Vol.-% | 7,28 |
| Gesamtporosität, nach DIN 993-1:1995 | Vol.-% | 8,52 |
| Kaltbiegefestigkeit, in Anlehnung an DIN 993-6:1995 (mit einem Auflagerabstand von 100 mm) | MPa | 35,54 |
| Kaltbiegefestigkeit nach 5 Thermoschockzyklen, nach DIN 993-11:2008 und in Anlehnung an DIN 993-6:1995 (mit einem Auflagerabstand von 100 mm) | MPa | 4,89 |
| Festigkeitsverlust nach 5 Thermoschockzyklen | % | 86 |
| E-Modul nach 0 1 | GPa | 95,70 |
| 3 | | 84,18 |
| 5 Thermoschockzyklen, nach DIN EN ISO 12680-1:2007 | | 40,47 |
| | | 31,39 |
| E-Modul-Verlust nach 5 Thermoschockzyklen | % | 67 |

## Patentansprüche

1. Syntheseverfahren zur Synthese eines feuerfesten oxidkeramischen, calciumzirkonathaltigen Werkstoffes, insbesondere in Form einer feuerfesten, bevorzugt mechanisch zerkleinerten, insbesondere gebrochenen und/oder gemahlenen, calciumzirkonathaltigen Körnung, mit folgenden Verfahrensschritten:
a) Herstellen einer Mischung ausschließlich aus zumindest einer mehlförmigen Ca-Rohstoffkomponente, zumindest einer mehlförmigen ZrO₂-Rohstoffkomponente und Wasser, mit einem Wassergehalt von > 5 bis 10 Gew.-% bezogen auf die Trockenmasse der Mischung und mit einem Molverhältnis CaO/ZrO₂ in der Mischung von 1,5:1 bis 1:1,6 vorzugsweise von 1:1,
b) Pressen der ausschließlich aus den Rohstoffkomponenten und dem Wasser bestehenden Mischung zu zumindest einem grünen Formkörper,
c) Vorzugsweise Trocknen des grünen Formkörpers,
d) Sintern des Formkörpers,
e) Gegebenenfalls mechanisches Zerkleinern, bevorzugt Brechen und/oder Mahlen, des gesinterten Formkörpers zur Körnung.

2. Syntheseverfahren nach Anspruch 1,
**dadurch gekennzeichnet, dass**
ein calciumzirkonathaltiger Werkstoff mit einem Gehalt von mindestens 98 Gew.-%, bevorzugt mindestens 99 Gew.-%, CaZrO₃ bezogen auf die Trockenmasse des Werkstoffs, und/oder ein phasenreiner calciumzirkonathaltiger Werkstoff hergestellt wird.

3. Syntheseverfahren nach einem der vorhergehenden Ansprüche,
**dadurch gekennzeichnet, dass**
als Ca-Rohstoffkomponente eine CaCO₃- und/oder eine CaO- und/oder eine Ca(OH)₂- und/oder eine CaC₂-haltige Rohstoffkomponente verwendet wird,
wobei vorzugsweise als CaCO₃-Rohstoffkomponente natürliches, gemahlenes Kalksteinmehl und/oder synthetisches, gefälltes Calciumcarbonat und/oder Kreide verwendet wird und/oder als CaO-Rohstoffkomponente Branntkalk verwendet wird und/oder als Ca(OH)₂-Rohstoffkomponente Kalkhydrat verwendet wird.

4. Syntheseverfahren nach einem der vorhergehenden Ansprüche, **dadurch gekennzeichnet, dass**
als ZrO₂-Rohstoffkomponente synthetisch hergestelltes, vorzugsweise monoklines, Zirkoniumdioxid verwendet wird.

5. Syntheseverfahren nach einem der vorhergehenden Ansprüche, **dadurch gekennzeichnet, dass**
die Rohstoffkomponenten jeweils eine Reinheit von mindestens 96 Gew.-%, bevorzugt mindestens 99 Gew.-% aufweisen.

6. Syntheseverfahren nach einem der vorhergehenden Ansprüche, **dadurch gekennzeichnet, dass**
a) die zumindest eine Ca-Rohstoffkomponente eine Korngröße von ≤ 200 µm, bevorzugt von ≤ 50 µm, besonders bevorzugt zwischen 200 nm und 10 µm, gemäß DIN EN 725-5:2007 aufweist und/oder der mittlere Korndurchmesser der Ca-Rohstoffkomponente 500 nm bis 5 µm, bevorzugt 0,8 bis 1 µm, beträgt,
und/oder
b) die zumindest eine ZrO₂-Rohstoffkomponente eine Korngröße von ≤ 200 µm, bevorzugt von ≤ 150 µm, besonders bevorzugt zwischen 200 nm und 10 µm, gemäß DIN EN 725-5:2007 aufweist und/oder der mittlere Korndurchmesser der ZrO₂-Rohstoffkomponente 500 nm bis 5 µm, bevorzugt 0,7 bis 1 µm, beträgt.

7. Syntheseverfahren nach einem der vorhergehenden Ansprüche, **dadurch gekennzeichnet, dass**
das Pressen mit einem Pressdruck von 30 bis 150 N/mm², bevorzugt von 50 bis 80 N/mm², erfolgt und/oder das Pressen durch uniaxiales oder isostatisches Pressen erfolgt.

8. Syntheseverfahren nach einem der vorhergehenden Ansprüche, **dadurch gekennzeichnet, dass**
ein quaderförmiger grüner Formkörper hergestellt wird.

9. Syntheseverfahren nach einem der vorhergehenden Ansprüche, **dadurch gekennzeichnet, dass**
ein grüner Formkörper mit
a) einer Rohdichte bestimmt gemäß DIN EN 993-17:1999 von 2,0 bis 3,0 g/cm³, bevorzugt 2,1 bis 2,5 g/cm³,
und/oder
b) einer Porosität gemäß DIN 66133:1993-06 von 30 bis 60 Vol.-%, bevorzugt 40 bis 50 Vol.-%,
und/oder
c) mit einer Kaltbiegefestigkeit nach DIN EN 993-6:1995-04 von mindestens 1 MPa,
hergestellt wird.

10. Syntheseverfahren nach einem der vorhergehenden Ansprüche, **dadurch gekennzeichnet, dass**
a) der grüne Formkörper bis auf eine Restfeuchte zwischen 0 und 2 Gew.-%, insbesondere zwischen 0 und 0,5 Gew.-%, bestimmt gemäß DIN 51078:2002-12 getrocknet wird,
und/oder
b) der grüne Formkörper mit einer Haltephase bei einer Endtemperatur von 1200 bis 1800 °C, bevorzugt 1400 bis 1650 °C, für eine Dauer von 2 bis 10 h, bevorzugt von 4 bis 6 h, gesintert wird, und/oder
c) während des Aufheizens eine Zwischenhaltephase bei einer Temperatur von 400 bis 1000 °C, bevorzugt 550 bis 900 °C, für eine Dauer von 1 bis 3 h, bevorzugt von 1,5 bis 2,5 h, durchgeführt wird.

11. Syntheseverfahren nach einem der vorhergehenden Ansprüche, **dadurch gekennzeichnet, dass**
a) beim Sintern mit einer Aufheizrate von 1 bis 10 K/min, bevorzugt von 2 bis 5 K/min, aufgeheizt wird,
und/oder
b) die Sinterung in einem elektrisch beheizten Ofen oder einem gasbeheizten Ofen durchgeführt wird.

## Claims

1. A synthesis method for the synthesis of a refractory oxide-ceramic, calcium zirconate-containing material, in particular in the form of a refractory calcium zirconate-containing granular material that is preferably mechanically comminuted, in particular crushed and/or ground, having the following method steps:
a) producing a mixture exclusively of at least one mealy Ca raw material component, at least one mealy ZrO₂ raw material component, and water, with a water content of > 5 to 10 wt.-% relative to the dry mass of the mixture and with a molar ratio CaO/ZrO₂ in the mixture of 1.5:1 to 1:1.6, preferably 1:1,
b) pressing the mixture exclusively consisting of the raw material components and water to form at least one green shaped body,
c) preferably drying the green shaped body,
d) sintering the shaped body,
e) if applicable, mechanical comminution, preferably crushing and/or grinding, of the sintered shaped body to form the granular material.

2. The synthesis method according to Claim 1,
**characterized in that**
a calcium zirconate-containing material having a content of at least 98 wt%, preferably at least 99 wt%, CaZrO₃, relative to the dry mass of the material and/or a phase-pure calcium zirconate-containing material is produced.

3. The synthesis method according to one of the preceding claims, **characterized in that**
a raw material component containing CaCO₃ and/or a raw material component containing CaO and/or a raw material component containing Ca(OH)₂ and/or a raw material component containing CaC₂ is used as Ca raw material component,
wherein preferably natural, ground limestone meal and/or synthetic, precipitated calcium carbonate and/or chalk is used as CaCO₃ raw material component and/or quicklime is used as CaO raw material component and/or hydrated lime is used as Ca(OH)₂ raw material component.

4. The synthesis method according to one of the preceding claims, **characterized in that**
synthetically produced, preferably monoclinic, zirconium dioxide is used as ZrO₂ raw material component.

5. The synthesis method according to one of the preceding claims, **characterized in that**
the raw material components each have a purity of at least 96 wt%, preferably of at least 99 wt%.

6. The synthesis method according to one of the preceding claims, **characterized in that**
a) the at least one Ca raw material component has a grain size of ≤ 200 µm, preferably ≤ 50 µm, particularly preferably between 200 nm and 10 µm, according to DIN EN 725-5:2007 and/or the average grain diameter of the Ca raw material component is 500 nm to 5 µm, preferably 0.8 to 1 µm, and/or
b) the at least one ZrO₂ raw material component has a grain size of ≤ 200 µm, preferably ≤ 150 µm, particularly preferably between 200 nm and 10 µm, according to DIN EN 725-5:2007 and/or the average grain diameter of the ZrO₂ raw material component is 500 nm to 5 µm, preferably 0.7 to 1 µm.

7. The synthesis method according to one of the preceding claims, **characterized in that**
the pressing takes place with a molding pressure of 30 to 150 N/mm², preferably 50 to 80 N/mm² and/or the pressing takes place by uniaxial or isostatic pressing.

8. The synthesis method according to one of the preceding claims, **characterized in that**
a cuboidal green shaped body is produced.

9. The synthesis method according to one of the preceding claims, **characterized in that**
a green shaped body having
a) a bulk density, determined according to DIN EN 993-17:1999, of 2.0 to 3.0 g/cm³, preferably 2.1 to 2.5 g/cm³,
and/or
b) a porosity according to DIN 66133:1993-06 of 30 to 60 vol%, preferably 40
to 50 vol%
and/or
c) a cold bending strength, according to DIN EN 993-6:1995-04, of at least 1 MPa,
is produced.

10. The synthesis method according to one of the preceding claims, **characterized in that**
a) the green shaped body is dried to a residual moisture between 0 and 2 wt%, in particular between 0 and 0.5 wt%, determined according to DIN 51078:2002-12,
and/or
b) the green shaped body is sintered with a holding phase at a final temperature of 1200 to 1800° C, preferably 1400 to 1650° C, for a duration of 2 to 10 h, preferably 4 to 6 h,
and/or
c) during the heating, an intermediate holding phase is carried out at a temperature of 400 to 1000° C, preferably 550 to 900° C, for a duration of 1 to 3 h, preferably 1.5 to 2.5 h.

11. The synthesis method according to one of the preceding claims, **characterized in that**
a) during the sintering, heating takes place at a heating rate of 1 to 10 K/min, preferably 2 to 5 K/min,
and/or
b) the sintering takes place in an electrically fired kiln or a gas-fired kiln.

## Revendications

1. Procédé de synthèse pour la synthèse d'un matériau réfractaire céramique d'oxyde contenant du zirconate de calcium, en particulier sous forme d'une granulation réfractaire, de préférence broyée mécaniquement, en particulier concassée et/ou moulue, contenant du zirconate de calcium, le procédé comprenant les étapes suivantes:
a) préparation d'un mélange composé exclusivement d'au moins un composant de matière première Ca sous forme de poudre, d'au moins un composant de matière première ZrO₂ sous forme de poudre et d'eau, avec une teneur en eau > 5 à 10 % en poids par rapport à la masse sèche du mélange et avec un rapport molaire CaO/ZrO₂ dans le mélange de 1,5:1 à 1:1,6, de préférence de 1:1,
b) Pressage du mélange composé exclusivement des composants de matière première et de l'eau pour former au moins un corps moulé vert,
c) de préférence séchage du corps moulé vert,
d) frittage du corps moulé,
e) le cas échéant, broyage mécanique, de préférence concassage et/ou mouture, du corps moulé fritté pour obtenir la granulation.

2. Procédé de synthèse selon la revendication 1,
**caractérisé en ce que**
un matériau contenant du zirconate de calcium avec une teneur d'au moins 98 % en poids, de préférence d'au moins 99 % en poids, de CaZrO₃ par rapport à la masse sèche du matériau, et/ou un matériau contenant du zirconate de calcium en phase pure est fabriqué.

3. Procédé de synthèse selon l'une des revendications précédentes, **caractérisé en ce que**
comme composant de matière première Ca un composant de matière première contenant du CaCO₃ et/ou du CaO et/ou du Ca(OH)₂ et/ou du CaC₂ est utilisé,
où on utilise de préférence comme composant de matière première CaCO₃ de la poudre de calcaire naturelle broyée et/ou du carbonate de calcium synthétique précipité et/ou de la craie et/ou on utilise comme composant de matière première CaO de la chaux vive et/ou on utilise comme composant de matière première Ca(OH)₂ de l'hydroxyde de calcium.

4. Procédé de synthèse selon l'une des revendications précédentes, **caractérisé en ce que**
comme composant de matière première ZrO₂, du dioxyde de zirconium fabriqué synthétiquement, de préférence monoclinique, est utilisé.

5. Procédé de synthèse selon l'une des revendications précédentes, **caractérisé en ce que**
les composants de matière première présentent chacun une pureté d'au moins 96 % en poids, de préférence d'au moins 99 % en poids.

6. Procédé de synthèse selon l'une des revendications précédentes, **caractérisé en ce que**
a) l'au moins un composant de matière première Ca comprend une taille du grain ≤ 200 µm, de préférence ≤ 50 µm, de manière particulièrement préférée comprise entre 200 nm et 10 µm, selon la norme DIN EN 725-5:2007, et/ou que le diamètre moyen des grains du composant de matière première Ca est compris entre 500 nm et 5 µm, de préférence entre 0,8 et 1 µm,
et/ou
b) l'au moins un composant de matière première ZrO₂ comprend une taille du grain ≤ 200 µm, de préférence ≤ 150 µm, de manière particulièrement préférée entre 200 nm et 10 µm, selon la norme DIN EN 725-5:2007 et/ou le diamètre moyen des grains du composant de matière première ZrO₂ est compris entre 500 nm et 5 µm, de préférence entre 0,7 et 1 µm.

7. Procédé de synthèse selon l'une des revendications précédentes, **caractérisé en ce que**
le pressage s'effectue avec une pression de 30 à 150 N/mm², de préférence de 50 à 80 N/mm², et/ou le pressage s'effectue par pressage uniaxial ou isostatique.

8. Procédé de synthèse selon l'une des revendications précédentes, **caractérisé en ce que**
un corps moulé vert parallélépipédique est fabriqué.

9. Procédé de synthèse selon l'une des revendications précédentes, **caractérisé en ce que**
un corps moulé vert avec
a) une densité apparente déterminée selon la norme DIN EN 993-17:1999 de 2,0 à 3,0 g/cm³, de préférence de 2,1 à 2,5 g/cm³, et/ou
b) une porosité selon la norme DIN 66133:1993-06 de 30 à 60 % en volume, de préférence de 40 à 50 % en volume,
et/ou
c) avec une résistance à la flexion à froid selon DIN EN 993-6:1995-04 d'au moins 1 MPa,
est fabriqué.

10. Procédé de synthèse selon l'une des revendications précédentes, **caractérisé en ce que**
a) le corps moulé vert est séché jusqu'à une humidité résiduelle comprise entre 0 et 2 % en poids, en particulier entre 0 et 0,5 % en poids, déterminée selon DIN 51078:2002-12,
et/ou
b) le corps vert est fritté avec une phase de maintien à une température finale de 1200 à 1800 °C, de préférence de 1400 à 1650 °C, pendant une durée comprise entre 2 et 10 heures, de préférence entre 4 et 6 heures,
et/ou
c) pendant le chauffage, une phase de maintien intermédiaire est effectuée à une température comprise entre 400 et 1000 °C, de préférence entre 550 et 900 °C, pour une durée comprise entre 1 et 3 heures, de préférence entre 1,5 et 2,5 heures.

11. Procédé de synthèse selon l'une des revendications précédentes, **caractérisé en ce que**
a) lors du frittage, le chauffage s'effectue à une vitesse de chauffage de 1 à 10 K/min, de préférence de 2 à 5 K/min,
et/ou
b) le frittage est effectué dans un four à chauffage électrique ou dans un four à chauffage au gaz.
